# EUROPÄISCHE PATENTSCHRIFT

(11) **EP 2 660 103 B1**
(45) Veröffentlichungstag und Bekanntmachung des Hinweises auf die Patenterteilung: **04.11.2020**
(21) Anmeldenummer: 13002326.0
(22) Anmeldetag: 30.04.2013
(51) Int. Cl.: B60Q 3/00, G02B 6/00

(54) **Lichtelement mit gezielter Beeinflussung der Kantenoptik**
Light element with deliberate influencing of the edge appearance
Elément lumineux avec influence ciblée de l'optique des bords

(30) Priorität: 03.05.2012 DE 102012008976
(43) Veröffentlichungstag der Anmeldung: 06.11.2013
(73) Patentinhaber: AUDI AG, 85045 Ingolstadt (DE)
(72) Erfinder: Reuschel, Jens Dietmar, 85053 Ingolstadt (DE)
(74) Vertreter: Thielmann, Frank

(56) Entgegenhaltungen:
- WO-A1-2004/104476
- JP-A- H10 253 402
- JP-A- 2010 267 547
- US-A1- 2008 266 853
- US-A1- 2010 214 224
- US-A1- 2010 315 826
- US-A1- 2012 044 692
- US-B1- 6 819 687

## Beschreibung

Die vorliegende Erfindung betrifft ein Lichtelement für ambiente Beleuchtung.

Darüber hinaus betrifft die vorliegende Erfindung ein Kraftfahrzeug mit dem erfindungsgemäßen Lichtelement und/oder mit dem erfindungsgemäßen Einrichtungsgegenstand.

Die JP 2010-267547 A beschreibt eine lichtführende Komponente mit einer Beleuchtungsabdeckung. Die lichtführende Komponente weist auf einer ersten Breitseite (main surface) eine Abrundung auf. Ein Vorderteil der Beleuchtungsabdeckung führt mittels eines Lichtstreuungsteils eine Lichtstreuung durch.

Die JP H10253402 A beschreibt eine konkave Oberfläche einer lichtleitenden Platte. Dadurch, dass die konkave Oberfläche topfförmig ist, wird Licht zum Zeiger hin gelenkt und ein Lichtverlust infolge einer Außenbeleuchtung der Aufsatzes vermieden.

Die US 6,819,687 B1 beschreibt eine Anordnung mit einem parabolischen Konzentrator und einem flachen Reflektor.

Die US 2010/0214224 A1 beschreibt ein lichtleitendes optisches Element mit einer Brechungsfläche. Die Brechungsfläche kann poliert sein, um eine optische Übertragung von austretendem Licht zu verbessern. Die Brechungsfläche ist dazu vorgesehen, Licht aus dem optischen Element auf eine Lichtöffnung zu richten. Außerdem ist die Brechungsfläche dazu vorgesehen, Licht mittels Lichtbrechung zu brechen.

Die WO 2004/104476 A1 beschreibt eine Regalbeleuchtung mit einer Austrittsfläche, die mit einer Riffelung oder einem Überzug versehen ist, um austretendes Licht aufzuspreizen beziehungsweise zu streuen.

Die DE 101 35 478 A1 beschreibt einen Lichtleiter mit einem Lichtführungsteil, ebenen Seitenbegrenzungsflächen und einer Lichtaustrittsfläche. Die Lichtaustrittsfläche weist einen konkav gekrümmten Verlauf auf, der eine Aufweitung des Lichtbündels bewirkt, das aus dem Lichtleiter an der Lichtaustrittsfläche ausgekoppelt wird.

Die DE 199 36 982 A1 beschreibt einen Querschnitt eines Innenausbauteils für Kraftfahrzeuge, das eine Lichtaustrittsfläche aufweist, die schräg zu einer sichtseitigen Oberfläche des Innenausbauteils ausgerichtet ist.

Die DE 42 28 877 A1 beschreibt einen Querschnitt eines in eine Sonnenblende eines Kraftfahrzeugs einzubauenden Kosmetikspiegels. Von einer Lichtquelle wird Lichtstrahlung zu schräg zur Ebene eines Lichtleiters weisenden Lichtaustrittsflächen emittiert.

Die DE 10 2009 038 483 A1 beschreibt ein Profilelement, das ein Lichtleiterkabel umschließt. Durch abschnittsweise transparente und abschnittsweise lichtundurchlässige Ausbildung vorbestimmter Abschnitte des Profilelements wird ein Lichtausfall auf vorbestimmte Bereiche begrenzt und/oder seine Intensität an unterschiedlichen Abschnitten unterschiedlich eingestellt.

Aus der DE 10 2009 027 792 A1 ist ein Lichtleiter zur ringförmigen Be- oder Hinterleuchtung von Inneneinrichtungen eines Fahrzeugs wie Cup-Holdern oder Betätigungselementen bekannt. In dem ringförmigen Lichtleiter erfolgt die Lichtverteilung in einer Lichtverteilebene. Das in dem Lichtleiter verteilte Licht wird vor dem Austritt aus dem Lichtleiter an einer oder mehreren Streuflächen gestreut und aus dem Lichtleiter ausgekoppelt. Die Streuflächen sind an einer, radial außen oder radial innen liegenden Fläche des Lichtleiters angeordnet. Alternativ wird vorgeschlagen, Licht mittels Streuflächen in Axialrichtung auszukoppeln, die in einer "oberen" oder in einer "unteren" Fläche des ringförmigen Lichtleiters angeordnet sind. Die US2008266853 beschreibt einen Getränkedosenhalter, der auf seinem oberen Rand einen ringförmigen Lichtleiter aufweist, der durch seine Ringinnenfläche Licht abstrahlt.

Mit diesem bekannten Lichtleiter können Hohlräume von bestimmten Einrichtungsgegenständen wie Trinkbecherhaltern (*Cup-Holder*) nicht in der gewünschten Weise gleichmäßig und blendfrei ausgeleuchtet werden. Eine Abstrahlung in Radialrichtung ist nicht blendfrei; und mit einer Abstrahlung in Axialrichtung lässt sich bestenfalls eine ringförmige Ausleuchtung des Hohlraums erreichen. Die ringförmige Ausleuchtung auf dem Boden des Trinkbecherhalters ist nicht immer erwünscht, da damit eine Struktur sichtbar wird, die nicht mit dem Aussehen des Trinkbecherhalters bei Tageslicht übereinstimmt und deren Anmutung nicht unbedingt zu den gestalterischen Zielen für die Innenausstattung passt.

Die Aufgabe der vorliegenden Erfindung besteht darin, ein Lichtelement bereitzustellen, mit dem eine gleichmäßigere Ausleuchtung eines Hohlraums eines Einrichtungsgegenstands erreicht werden kann oder mit dem eine Beleuchtung eines Einrichtungsgegenstands freizügiger gestaltet werden kann, als dies mit dem bekannten Lichtleiter möglich ist. Außerdem besteht die Aufgabe der Erfindung darin, einen entsprechenden Einrichtungsgegenstand und ein entsprechendes Kraftfahrzeug bereitzustellen.

Erfindungsgemäß wird diese Aufgabe unter einem ersten Aspekt durch eine Vorrichtung nach Anspruch 1 gelöst. Vorteilhafte Weiterbildungen der Erfindung ergeben sich aus den Unteransprüchen.

Entsprechend der vorliegenden Erfindung wird unter dem ersten Aspekt demnach ein Lichtelement für ambiente Beleuchtung bereitgestellt, wobei das Lichtelement aus einem Lichtleiter besteht, wobei der Lichtleiter eine Lichtverteilebene und eine Hauptstreufläche aufweist. Der Lichtleiter weist eine erste und eine zweite Breitseite auf. Die beiden Breitseiten sind im Wesentlichen parallel zueinander angeordnet. Der Lichtleiter leitet eingekoppeltes Licht mittels Totalreflexion an den beiden Breitseiten entlang der Lichtverteilebene und mittels Totalreflexion an einer Abrundung der ersten Breitseite zu der Hauptstreufläche. Die Hauptstreufläche bildet eine Fase zwischen der Abrundung der ersten Breitseite und der zweiten Breitseite des Lichtelements. Ein Winkel zwischen einer Flächennormalen der Hauptstreufläche und einer Flächennormalen der Lichtverteilebene beträgt zwischen 10° und 80°.

Unabhängig davon kann ein Lichtelement für ambiente Beleuchtung eine Lichtverteilebene und eine Hauptstreufläche aufweisen, wobei ein Winkel zwischen einer Flächennormalen der Hauptstreufläche und einer Flächennormalen der Lichtverteilebene zwischen 10° und 80° beträgt. Das Lichtelement weist eine erste und eine zweite Breitseite auf. Die beiden Breitseiten sind im Wesentlichen parallel zueinander angeordnet. Die Hauptstreufläche verläuft entlang einer Abrundung der ersten Breitseite. Ein Krümmungsradius der Abrundung ist mindestens so groß, dass das Lichtelement die Eigenschaft aufweist, dass, wenn sichtbares Licht in die Lichtverteilebene des Lichtelements eingestrahlt wird, Leckstrahlungsverluste von Lichtstrahlen, die durch das Lichtelement bis zu einem ersten Querschnitt an einem Beginn der Abrundung geführt sind, auf einem Weg zwischen dem ersten Querschnitt des Lichtelements bis zu einem zweiten Querschnitt des Lichtelements, der sich direkt vor der Hauptstreufläche befindet, aber keinen Teil der Hauptstreufläche umfasst, nicht mehr als 15 %, bevorzugt nicht mehr als 10 %, insbesondere bevorzugt nicht mehr als 5 %, betragen.

Bevorzugt ist, wenn das Lichtelement folgende Eigenschaft hat: Wenn in eine Seitenfläche des Lichtelements sichtbares Licht eingestrahlt wird, die der Hauptstreufläche gegenüberliegt, verlässt davon mindestens viermal (vorzugsweise mindestens achtmal) so viel Licht das Lichtelement über die Hauptstreufläche wie Licht von dem eingestrahlten Licht das Lichtelement über andere Außenflächen des Lichtelements verlässt.

Außerdem wird entsprechend der Erfindung ein Einrichtungsgegenstand für ein Fahrzeug bereitgestellt, der ein erfindungsgemäßes Lichtleitleitelement umfasst. Außerdem wird durch die Erfindung ein Kraftfahrzeug bereitgestellt, das einen erfindungsgemäßen Einrichtungsgegenstand und/oder ein erfindungsgemäßes Lichtelement umfasst.

Durch Wahl des Winkels zwischen der Flächennormalen der Hauptstreufläche und der Flächennormalen der Lichtverteilebene ist es mit dem vorgeschlagenen Lichtelement möglich, Abstrahlrichtungen und Abstrahlintensitäten der Hauptstreufläche freizügig festzulegen und nahezu jede denkbare Ausleuchtungsverteilung eines Hohlraums eines Einrichtungsgegenstands zu erreichen. Insbesondere lassen sich mittels einer Strukturierung der Hauptstreufläche (beispielsweise für eine Fresnellinse oder ein Mikrolinsenarray) Abstrahlrichtungen der Hauptstreufläche genauer festlegen, wenn Flächennormalen der Hauptstreufläche in Richtungen zeigt, in die das Licht abzustrahlen ist. Eine ringförmigen Hauptstreufläche weist dabei die Form einer Kegelstumpfmantelfläche eines gedachten Kegelstumpfs auf. Die Hauptlängsachse des gedachten Kegelstumpfs kann mit der Flächennormalen der Lichtverteilebene des Lichtelements übereinstimmen. Das Lichtelement kann auch als Lichtverteiler für eine Leseleuchte, eine Handschuhfachleuchte oder eine Deckenbeleuchtung (beispielsweise in einem Lastraum oder in einem Kofferraum) verwendet werden.

Die Hauptstreufläche verläuft entlang einer Abrundung der ersten Breitseite, wobei die Hauptstreufläche für sichtbares Licht eine Streuwirkung pro Flächeneinheit aufweist, die vorzugsweise mindestens viermal so groß ist, wie eine Streuwirkung, die die Abrundung für das sichtbare Licht pro Flächeneinheit aufweist. Hierdurch kann das Licht in effizienter Weise (d.h. mit verhältnismäßig geringen Leckverlusten) zur Hauptstreufläche geführt werden, ohne dabei ein Erscheinungsbild des Lichtelements im Bereich des Streuelements grundlegend zu verändern, wie dies beispielsweise bei einer Verspiegelung der Fall wäre.

Insbesondere bevorzugt ist, wenn ein Krümmungsradius der Abrundung mindestens so groß ist, dass das Lichtelement die Eigenschaft aufweist, dass, wenn sichtbares Licht in die Lichtverteilebene des Lichtelements eingestrahlt wird, Leckstrahlungsverluste von Lichtstrahlen, die durch das Lichtelement bis zu einem ersten Querschnitt an einem Beginn der Abrundung geführt sind, auf einem Weg zwischen dem ersten Querschnitt des Lichtelements bis zu einem zweiten Querschnitt des Lichtelements, der sich direkt vor der Hauptstreufläche befindet, aber keinen Teil der Hauptstreufläche umfasst, nicht mehr als 15 %, bevorzugt nicht mehr als 10 %, insbesondere bevorzugt nicht mehr als 5 %, betragen. Hierdurch steht der überwiegende Teil des in den Lichtleiter eingekoppelten Lichts zur Auskopplung aus der Hauptstreufläche für Beleuchtungszwecke zur Verfügung.

Je nach Anwendung ist es zweckmäßig, wenn der Winkel zwischen den Flächennormalen größer als 15°, bevorzugt größer als 30° oder größer als 45°, insbesondere bevorzugt größer als 60°, ist. Mittels eines größeren Winkels zwischen den Flächennormalen als 10° ist von dem Lichtelement aus eine schräge Abstrahlung des ausgekoppelten Lichts möglich, um von dem Lichtelement weiter entfernt angeordnete Einrichtungsteile zu beleuchten.

Auch kann es zweckmäßig sein, wenn der Winkel zwischen den Flächennormalen kleiner als 70°, bevorzugt kleiner als 55° oder kleiner als 40°, insbesondere bevorzugt kleiner als 25°, ist. Mittels eines nicht zu großen Winkels zwischen den Flächennormalen kann von dem Lichtelement aus eine Abstrahlung des ausgekoppelten Lichts in die Tiefe eines Einrichtungsteils erfolgen.

Die zweite Breitseite kann ein Muster oder Relief zur Lichtauskopplung aufweisen. Hierdurch kann mit nur einer Lichteinkoppelstelle sowohl eine blendfreie Beleuchtung einer Inneneinrichtungsfläche wie auch eine Auffindbeleuchtung für eine Fahrzeuginneneinrichtung, insbesondere für eine Ablage, erreicht werden.

Das Relief kann eine oder mehrere Nuten umfassen, die quer, parallel oder senkrecht zu einem Längsverlauf der Hauptstreufläche verlaufen. Nuten sind aufgrund ihrer kontrastreichen Struktur eine kostengünstige Möglichkeit, eine gut wahrnehmbare ambiente Beleuchtung mit einem geringen Streuflächenanteil zu schaffen.

Die vorliegende Erfindung wird nun anhand der beigefügten Zeichnung näher erläutert, die einen schematischen Aufbau einer erfindungsgemäßen Kontaktanordnung wiedergibt.

Hierbei zeigen:
- Fig. 1: schematisch eine nichtmaßstäbliche, perspektivische Aufsicht auf einen in einer Mittelkonsole eines Kraftfahrzeugs angeordneten Trinkbecherhalter mit einem erfindungsgemäßen Lichtelement;
- Fig. 2: schematisch einen nichtmaßstäblichen Frontalschnitt durch den Trinkbecherhalter; und
- Fig. 3: schematisch eine nichtmaßstäbliche Detailansicht eines Schnitts entlang einer anderen Schnittebene.

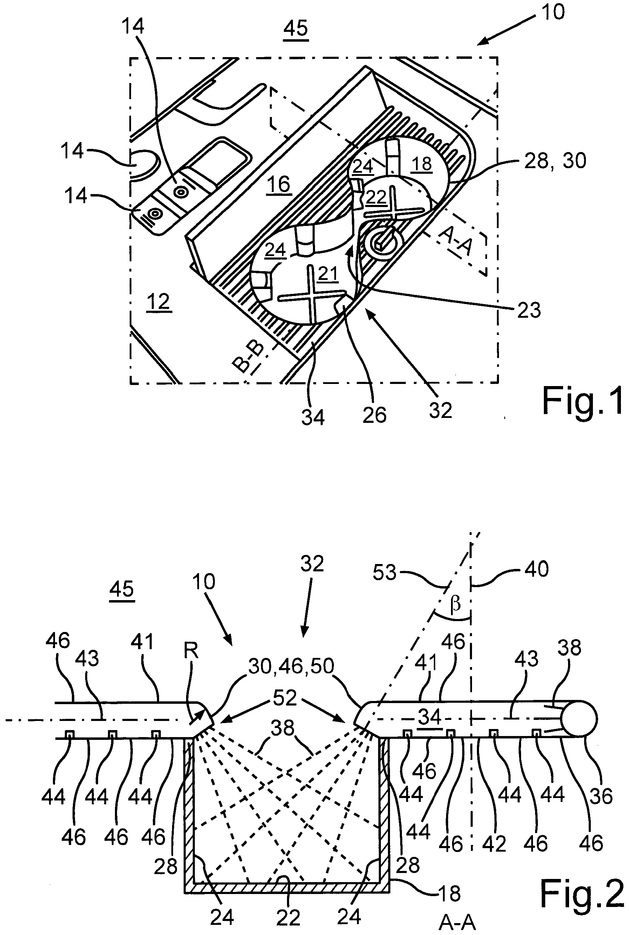

Der in der Fig. 1 gezeigte Trinkbecherhalter 10 (*Cup-Holder*) ist in einer Mittelkonsole 12 eines Kraftfahrzeugs neben Bedienelementen 14 angeordnet. Der Trinkbecherhalter 10 umfasst eine Abdeckung 16, die teilweise wegklappbar und teilweise versenkbar ist. Die Abdeckung 16 ist in der Figur in der versenkten Stellung dargestellt. Der Trinkbecherhalter 10 umfasst ein Behältnis 18 (Versenkung) mit hantelförmigem Grundriss. Das Behältnis 18 umfasst zwei Ablagen 21, 22 zum Abstellen von je einem (in den Figuren nicht dargestellten) Trinkbecher. Jede der beiden Ablagen 21, 22 weist an ihrem Innenumfang 24 drei Halteklammern 26 mit je einer (in den Figuren nicht dargestellten) Andruckfeder auf. Die Ausklapppositionen der Halteklammern 26 können sich mittels ihrer Andruckfedern an abgestellte Trinkbecher unterschiedlichen Durchmessers (beispielsweise an Coffee-To-Go-Pappbecher) anpassen. Hierdurch wird ein Umkippen und/oder ein Verrutschen des Trinkbechers infolge von Fahrzeugbewegungen vermieden. Der obere Rand 28 des Behältnisses 18, das beiden Ablagen 21, 22 gemeinsam ist, ist von einem Rand 30 eines Ausschnitts 32 eines Lichtelements 34 abgedeckt, das für den Trinkbecherhalter 10 eine Abschlussplatte bildet.

Der in der Fig. 2 skizzierte Schnitt durch den Trinkbecherhalter 10 verläuft entlang der in Fig. 1 gezeigten Schnittebene A-A. Der Schnitt verläuft durch das plattenförmige Lichtelement 34 und durch das Behältnis 18. Über eine oder mehrere Schmalseiten des Lichtelements 34 wird mittels einer oder mehren Lichtquellen 36 sichtbares Licht 38 in das Lichtelement 34 eingekoppelt. Um eine möglichst gleichmäßige Einkopplung von Licht 38 zu erzielen, kann ein Lichtleiter 36 vorgesehen sein, der an einen Außenumfang des Lichtelements 34 (vorzugsweise umlaufend) angeordnet ist. Der Lichtleiter 36 ist nicht zwingend, aber typischerweise, im Wesentlichen drahtförmig.

Das Lichtelement 34 besteht aus einem lichtleitenden Kunststoff, beispielsweise aus PMMA (Polymethylmetachrylat). Zusätzlich oder alternativ kann das sichtbare Licht 38 auch über eine Innenwandfläche einer (in den Figuren nicht dargestellten) Aussparung des Lichtelements 34 in das Lichtelement 34 eingestrahlt werden.

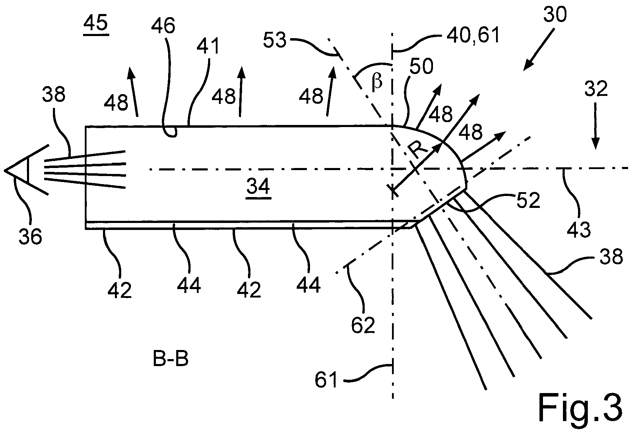

Auf der Unterseite 42 (zweiten Breitseite) des Lichtelements 34 sind in Längsrichtung Nuten 44 eingefräst, die zwischen 0,5 und 1 mm breit sind. An den Nuten 44 wird in dem Lichtelement 34 geführtes Licht 38 gestreut. So erhält ein Teil des Lichtes 38 eine Ausbreitungsrichtung, bei der eine Totalreflexion nicht mehr gegeben ist, so dass dieser Teil des Lichtes 38 das Lichtelement 34 an dessen Oberseite 41 verlässt. Dadurch sind die Nuten 44 und damit auch das Lichtelement 34 auch im Dunklen wahrnehmbar. Wie die Fig. 3 zeigt, können die Nuten 44 auch in Lichtausbreitungsrichtung ausgerichtet sein.

Mit den lichtstreuenden Strukturen 44 in der Unterseite 42 des Lichtelements 34 liefert der Trinkbecherhalter 10 einen Beitrag zu einer ambienten Beleuchtung (Umgebungslicht) im Fahrzeuginnenraum 45. Neben der kostengünstigen Herstellbarkeit haben die Nuten 44 den Vorteil, dass sie eine begrenzte Menge von Licht 38, das für die ambiente Beleuchtung bereitgestellt wird, auf einen kleinen Teil der Gesamtfläche des Lichtelements 34 (d.h. auf einen kleinen Teil der Abschlussplatte 34) konzentrieren. Durch Konzentration der Streuung des Lichts 38, das in das Lichtelement 34 eingestrahlt wird, auf wenige schmale Streuflächen 44 wird auch bei geringer Lichtmenge eine optimale Wahrnehmbarkeit der Abschlussplatte 34 erreicht. Aufgrund des hohen Lichtkontrasts zwischen den lichtstreuenden Strukturen 44 und den dazwischen liegenden beidseitig polierten Totalreflexionsflächen 46 des Lichtelements 34 wirkt die ambiente Beleuchtung sauber und gepflegt. Denn durch den hohen Kontrast zu den lichtstreuenden Strukturen 44 wird eine Auffälligkeit und/oder Wahrnehmbarkeit von Lecklicht 48 stark verringert, das aus der Oberseite 41 des Lichtelements 34 an polierten Flächen 46 austritt. Statt oder zusätzlich zu den Nuten 44 können in die Unterseite des Lichtelements 34 auch andere Strukturen (beispielsweise ein Markenemblem) eingearbeitet sein.

Wie die Detailschnittzeichnung der Fig. 3 für einen Schnitt entlang der in Fig. 1 gezeigten Schnittebene B-B (ohne Behältnis 18) im Detail zeigt, weist das Lichtelement 34 auf einer Seite 41, die von dem oberen Rand 28 des Behältnisses 18 abgewandt ist, eine polierte, konvex gekrümmte Abrundung 50 auf. Die Abrundung 50 ist nicht verspiegelt und hat einen Krümmungsradius R, der groß genug dafür ist, dass in das Lichtelement 34 eingestrahltes sichtbares Licht 38 an der Abrundung 50 überwiegend nicht gebrochen, sondern dort mittels Totalreflexion bis zu einer Hauptstreufläche 52 weitergeleitet wird. Dadurch wird erreicht, dass Leckstrahlungsverluste 48 von sichtbarem Licht 38, welches in das Lichtelement 34 seitlich eingestrahlt wurde, im Bereich der Abrundung 50 kleiner als 6 %, vorzugsweise nicht größer als 5 %, sind. Von dem gesamten Licht 38, das in das Lichtelement 34 eingekoppelten wird, wird beispielsweise 5 % aufgrund unvollständiger Totalreflexion als Lecklicht 48 ohne vorherige Wechselwirkung mit einer der Streuflächen 44, 52 aus dem Lichtelement 34 ausgekoppelt.

Die Nuten 44 sind bei Sicht auf das Lichtelement 34 bei Tageslicht und bei in Betrieb befindlicher Ambientbeleuchtung auch bei abgedunkeltem Fahrzeuginnenraum 45 sichtbar. Dadurch, dass die Nuten 44 durch die Oberseite 41 des Lichtelements 34 hindurch sichtbar sind und die Nuten 44 auf der Unterseite 42 des Lichtelements 34 angeordnet sind, erhält das Lichtelement 34 optisch eine räumliche Tiefe mit einer gestalterisch innovativen Anmutung.

Am Rand des Ausschnitts 32 ist zwischen der Abrundung 50 und einer Unterseite 42 des Lichtelements 34 eine Hauptstreufläche 52 angeordnet. Die Hauptstreufläche 52 bildet eine Fase zwischen der Abrundung 50 und der Unterseite 42 des Lichtelements 34. Die Hauptstreufläche 52 ist von dem Rand 30 der Ausschnitts 32 des Lichtelements 34 aus gesehen schräg nach unten ausgerichtet. Der Winkel β zwischen einer Flächennormalen 53 der Hauptstreufläche 52 und einer Flächennormalen 40 der Oberseite 41 des Lichtelements 34 liegt zwischen 10° und 80°, beispielsweise bei 45%. Die Hauptstreufläche 52 für eine einzelne Ablage 21, 22 hat also im Wesentlichen die Form der Mantelfläche eines gedachten Kegelstumpfs mit der Höhe von einigen zehntel bis wenigen Millimetern. Beim Ausführungsbeispiel der Fig. 1 ist aufgrund des Verbindungsbereichs 23 zwischen den beiden Ablagen 21, 22 über eine Umfangslänge von 8 bis 30 Millimetern ein Segment aus der Mantelfläche des Kegelstumpfs ausgespart.

Allgemeiner kann der Winkel β in Bezug auf eine Flächennormale 40 einer gedachten Lichtverteilebene 43 definiert sein, welche mittig zwischen zwei Außenflächen 41, 42 (Breitseiten) des Lichtelements 34 angeordnet ist, wobei die Außenflächen 41, 42 des Lichtelements 34 dazu geeignet sind, mittels überwiegender Totalreflexion sichtbares Licht 38 zwischen den beiden Außenflächen 41, 42 des Lichtelements 34 zu führen.

Die Hauptstreufläche 52 ist mittels An- oder Aufrauen, beispielsweise mittels Anschleifen mit einem geeigneten Schleifmittel oder mittels eines Ätzmittels, an den Ausschnittrand 30 angeformt. Hierdurch wird erreicht, dass das Innere des Behältnisses 18 ausgeleuchtet wird, ohne dass dafür ein zusätzliches Leuchtmittel benötigt wird.

Durch die beschriebenen Maßnahmen wird erreicht, dass die Beleuchtung blendfrei ausgeführt werden kann und der Abstellort 21, 22 für Trinkbecher wie auch dessen Einfassung (welche durch die Abdeckplatte 34 mit ihrer Aussparung 32 gebildet wird) auch bei abgedunkelten Fahrzeuginnenraum 45 leicht aufgefunden werden kann. Sowohl Blendfreiheit wie auch leichte Auffindbarkeit des Abstellorts (d.h. der Ablagen 21, 22) tragen zur Verkehrssicherheit bei.

## Patentansprüche

1. Vorrichtung (10, 34) für ein Fahrzeug umfassend:
- ein Lichtelement (34) für ambiente Beleuchtung, wobei das Lichtelement aus einem Lichtleiter besteht, wobei der Lichtleiter eine Lichtverteilebene (43) und eine Hauptstreufläche (52) aufweist, wobei
- der Lichtleiter eine erste (41) und eine zweite (42) Breitseite aufweist, wobei die beiden Breitseiten (41, 42) im Wesentlichen parallel zueinander angeordnet sind, wobei der Lichtleiter eingekoppeltes Licht mittels Totalreflexion an den beiden Breitseiten entlang der Lichtverteilebene (43) und mittels Totalreflexion an einer Abschrägung (50) der ersten Breitseite (41) zu der Hauptstreufläche (52) leitet,
wobei
- die Hauptstreufläche (52) eine Fase zwischen der Abschrägung (50) der ersten Breitseite (41) und der zweiten Breitseite (42) des Lichtelements (34) bildet, wobei ein Winkel (β) zwischen einer Flächennormalen (53) der Hauptstreufläche (52) und einer Flächennormalen (40) der Lichtverteilebene (43) zwischen 10° und 80° beträgt, wobei
- die Hauptstreufläche (52) ringförmig ist und die Form einer Kegelstumpfmantelfläche eines gedachten Kegelstumpfs aufweist,
**dadurch gekennzeichnet, dass** die Abschrägung gekrümmt ist und dass
- die Vorrichtung (10, 30) ferner einen Trinkbecherhalter (10) umfasst, welcher ein Behältnis (18) aufweist, wobei das Behältnis (18) zwei Ablagen (21, 22) zum Abstellen von je einem Trinkbecher und einen oberen Rand (28) umfasst, wobei
- der obere Rand (28) des Behältnisses (18), das beiden Ablagen (21, 22) gemeinsam ist, von einem Rand (30) eines Ausschnitts (32) des Lichtelements (34) abgedeckt ist, das für den Trinkbecherhalter (10) eine Abschlussplatte bildet.

2. Vorrichtung (10, 34) nach Anspruch 1, **dadurch gekennzeichnet, dass** der Winkel (β) zwischen den Flächennormalen (40, 53) größer als 15° ist.

3. Vorrichtung (10, 34) nach Anspruch 1 oder 2, **dadurch gekennzeichnet, dass** der Winkel (β) zwischen den Flächennormalen (40, 53) kleiner als 70° ist.

4. Vorrichtung (10, 34) nach einem der Ansprüche 1 bis 3, **dadurch gekennzeichnet, dass** die zweite Breitseite (42) ein Muster oder Relief (44) zur Streuung und Lichtauskopplung aufweist.

5. Vorrichtung (10, 34) nach Anspruch 4, **dadurch gekennzeichnet, dass** das Relief (44) eine oder mehrere Nuten umfasst, die quer, parallel oder senkrecht zu einem Längsverlauf der Hauptstreufläche (52) verlaufen.

6. Kraftfahrzeug, **gekennzeichnet durch** eine Vorrichtung (10, 34) nach einem der Ansprüche 1 bis 5.

## Claims

1. Device (10, 34) for a vehicle comprising:
- a light element (34) for ambient lighting, wherein the light element consists of a light guide, wherein the light guide has a light distribution plane (43) and a main spreading surface (52), wherein
- the light guide has a first (41) and a second (42) broad side, wherein the two broad sides (41, 42) are arranged substantially parallel to one another, wherein the light guide guides coupled light by means of total reflection to the two broad sides along the light distribution plane (43) and by means of total reflection on a slope (50) of the first broad side (41) to the main spreading surface (52),
wherein
- the main spreading surface (52) forms a bevel between the slope (50) of the first broad side (41) and the second broad side (42) of the light element (34), wherein an angle (β) between a surface normal (53) of the main spreading surface (52) and a surface normal (40) of the light distribution plane (43) is between 10° and 80°, wherein the main spreading surface (52) is annular and has the shape of a frustoconical surface of an imaginary truncated cone,
**characterised in that** the slope is curved and that
- the device (10, 30) includes furthermore a drinking cup holder (10) which has a receptacle (18), wherein the receptacle (18) has two placement areas (21, 22) for placing in each case one drinking cup, and an upper edge (28), wherein
- the upper edge (28) of the receptacle (18), which is shared by both placement areas (21, 22) is covered by an edge (30) of a section (32) of the light element (34), which edge forms a closing plate for the drinking cup holder (10).

2. Device (10, 34) according to claim 1, **characterised in that** the angle (β) between the surface normal is (40, 53) is greater than 15°.

3. Device (10, 34) according to claim 1 or 2, **characterised in that** the angle (β) between the surface normal is (40, 53) is less than 70°.

4. Device (10, 34) according to any of claims 1 to 3, **characterised in that** the second broad side (42) has a pattern or relief (44) for spreading and light outcoupling.

5. Device (10, 34) according to claim 4, **characterised in that** the relief (44) comprises one or several grooves which extend transverse, parallel or perpendicular to a longitudinal extent of the main spreading surface (52).

6. Motor vehicle **characterised by** a device (10, 34) according to any of claims 1 to 5.

## Revendications

1. Dispositif (10, 34) pour un véhicule comprenant :
- un élément de lumière (34) pour l'éclairage ambiant, dans lequel l'élément de lumière se compose d'un guide de lumière, dans lequel le guide de lumière présente un plan de distribution de lumière (43) et une surface de diffusion principale (52), dans lequel
- le guide de lumière présente un premier (41) et un deuxième (42) côté large, dans lequel les deux côtés larges (41, 42) sont agencés sensiblement parallèlement l'un à l'autre, dans lequel le guide de lumière guide la lumière injectée par réflexion totale aux deux côtés larges le long du plan de distribution de lumière (43) et par réflexion totale à un chanfrein (50) du premier côté large (41) par rapport à la surface de diffusion principale (52),
dans lequel
- la surface de diffusion principale (52) forme un biseau entre le chanfrein (50) du premier côté large (41) et du deuxième côté large (42) de l'élément de lumière (34), dans lequel un angle (β) entre une normale à la surface (53) de la surface de diffusion principale (52) et une normale à la surface (40) du plan de distribution de lumière (43) est entre 10° et 80°, dans lequel
- la surface de diffusion principale (52) est annulaire et présente la forme d'une surface d'enveloppe de cône tronqué d'un cône tronqué imaginaire,
**caractérisé en ce que** le chanfrein est incurvé et que
- le dispositif (10, 30) comprend en outre un porte-gobelet (10), lequel présente un contenant (18), dans lequel le contenant (18) comprend deux dépôts (21, 22) pour le dépôt de respectivement un gobelet et un bord supérieur (28), dans lequel
- le bord supérieur (28) du contenant (18), qui est commun aux deux dépôts (21, 22), est recouvert par un bord (30) d'un fragment (32) de l'élément de lumière (34), qui forme une plaque terminale pour le porte gobelet (10).

2. Dispositif (10, 34) selon la revendication 1, **caractérisé en ce que** l'angle (β) entre les normales à la surface (40, 53) est supérieur à 15°.

3. Dispositif (10, 34) selon la revendication 1 ou 2, **caractérisé en ce que** l'angle (β) entre les normales à la surface (40, 53) est inférieur à 70°.

4. Dispositif (10, 34) selon l'une quelconque des revendications 1 à 3, **caractérisé en ce que** le deuxième côté large (42) présente un motif ou relief (44) pour la diffusion et le découplage de lumière.

5. Dispositif (10, 34) selon la revendication 4, **caractérisé en ce que** le relief (44) comprend une ou plusieurs rainures, qui s'étendent transversalement, parallèlement ou perpendiculairement à une extension longitudinale de la surface de diffusion principale (52).

6. Véhicule automobile, **caractérisé par** un dispositif (10, 34) selon l'une quelconque des revendications 1 à 5.
